# EUROPEAN PATENT APPLICATION

(11) **EP 1 925 890 A2**
(43) Date of publication of application: **28.05.2008**
(21) Application number: 07021767.4
(22) Date of filing: 09.11.2007
(51) Int. Cl.: F24J 2/05, F24J 2/26, F24J 2/51

(54) **Tubular element for heating fluids with solar power**

(30) Priority: 21.11.2006 ES 200602512
(71) Applicant: Alegre Sanchez, Ricardo, 50012 Zaragoza (ES); Lazaro Carreter, Mercedes, 50012 Zaragoza (ES)
(72) Inventor: Alegre Sanchez, Ricardo, 50012 Zaragosa (ES)
(74) Representative: Isern-Jara, Nuria

(57) **Abstract**

A tubular element for heating fluids with solar power, comprising a tubular pipe (1) defined by two concentric glass walls (2,3), the ends of which close upon themselves, and between which a vacuum is formed, and in which the inner wall of glass (3) that is in contact with the vacuum has a surface treatment, including the inner part (4) of the pipe at least one sheet of copper (5,6) adapted to the outline of the inner glass wall, and said at least one sheet of copper (5,6) has a point of contact with each of the two stretches of pipe for the flow of fluids separated by a flexible intermediate element.

## Description

### OBJECT OF THE INVENTION

The object of this application for a utility model is the registration of a tubular element for heating fluids with solar power that includes considerable innovations and advantages over other devices and elements with the same purpose.

More specifically, the invention refers to a solar-powered tubular heating element, comprising a tubular pipe defined by two concentric glass walls, the ends of which close upon themselves, and between which a vacuum is formed, substantially improving its thermal transmission for the heating of the fluid to be heated.

### BACKGROUND OF THE INVENTION

There is currently greater awareness of the use of renewable energy in everyday life for both domestic and industrial purposes.

One example of this is the use of devices to transport fluids which, by capturing solar power through solar panels, are capable of heating water such that, when it subsequently passes through an electric or gas heating device, substantially less energy is required for heating.

However, these kinds of devices need to be installed in a larger surface area and they are expensive.

Moreover, other devices are also known with solar collectors for heating fluids, which consist of tubular bodies that have a vacuum part and have pipes to circulate fluids. However, in most cases, their energy yield is not as good as would be desirable.

### DESCRIPTION OF THE INVENTION

This invention has been developed in order to provide a tubular heating element that solves the aforementioned disadvantages, and also provides additional advantages that will be evident in the description attached below.

The solar-powered tubular heating element, which is the object of the invention, is of the kind comprising a tubular pipe defined by two concentric glass walls, the ends of which close upon themselves, and between which a vacuum is formed, which is essentially characterised by the inside part of the pipe including at least one sheet of copper adapted to the outline of the inner wall of glass, and this at least one sheet of copper having at least one point of contact with each of the two stretches of pipe for the flow of fluids, separated by a flexible intermediate element. In addition, the face of the inner glass wall that is in contact with the vacuum has a surface treatment.

These features achieve a greater energy yield than other similar prior-art devices. The presence of the intermediate element helps the copper sheet adapt to the circular surface, and the fact that the air inside is removed considerably improves the yield since there are no losses due to the transmission of heat to the air and all of the heat received by the vacuum pipe is transmitted to the copper sheets and, finally, it absorbs the expansion and contraction of the copper without creating tension on the inside of the tubular element. The presence of these sheets improves thermal transmission by eliminating the thermal bridges caused by the air chambers created in other known devices.

In a preferred embodiment the at least one sheet of copper is joined to the stretches of copper pipe tangentially. Alternatively, the at least one sheet of copper partially envelops each of the stretches of pipe.

The two aforementioned stretches of copper pipe are laid out at opposite ends.

The intermediate element is made of an insulating material that is resistant to high temperatures.

Additionally, the tubular element may have an outer structure that has solar collection reflectors aimed at the tubular pipe that shine the sun's rays onto the rear areas, which are usually in the shade, thus increasing the transfer of heat.

Also preferably, the element of the invention has two copper sheets, each of them joined to each of the stretches of pipe so that fluids can flow through.

The use of aluminium sheets is known in the prior art, but they have worse thermal transmission, since while the thermal transmission of aluminium is 237 W/(m.K.), for copper it is 701 W/(m.K.), so the use of aluminium implies using a thicker sheet and therefore a higher manufacturing cost.

Other features and advantages of the tubular heating element that is the object of this invention will be evident in the description of a preferred, but not sole, embodiment, which is illustrated in the attached drawings by way of example but not limited thereto.

### BRIEF DESCRIPTION OF THE DRAWINGS

Figure 1 is a cross-section of a tubular heating element in accordance with this invention;
Figure 2 is a cross-section of a second embodiment of the tubular heating element of the invention;
Figure 3 is a plan view of the tubular element shown in figure 1; and
Figure 4 is a cross-section of a third embodiment of the tubular element.

### DESCRIPTION OF A PREFERRED EMBODIMENT

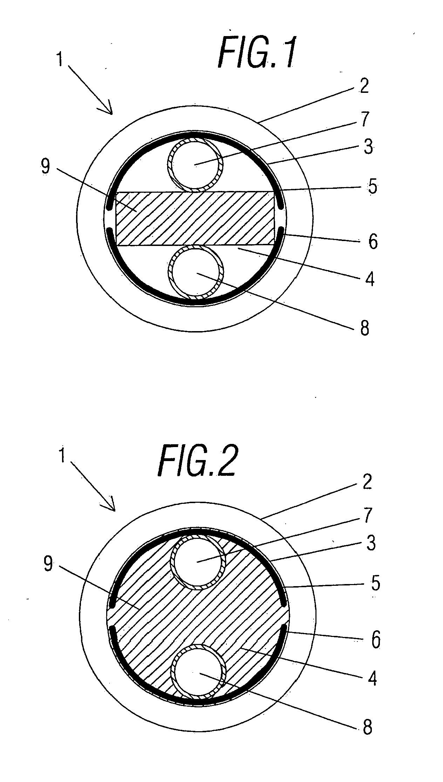

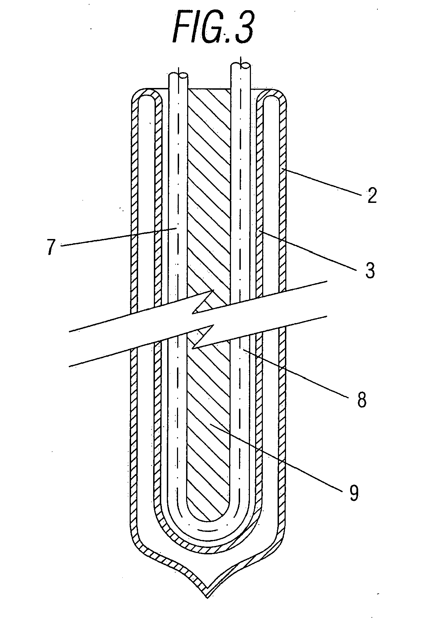

As shown in figures 1 and 3, one embodiment of the tubular element for heating fluids through solar power, for example heating hot water for a building, consists of a tubular pipe referred to generally by number 1 defined by two concentric glass walls 2, 3 separated by a distance, the ends of which close upon themselves, and between which a vacuum is formed. The vacuum created between the two glass walls 2, 3 prevents the rays that fall on the selective treatment of the inner pipe from being reflected and therefore not used. It should be pointed out that the face of the inner glass wall 3 that is in contact with the vacuum has a surface treatment commonly known as "selective treatment" to improve the collection of solar power.

The inner part 4 of the pipe includes two copper sheets 5, 6 with a thickness of between 0.12 and 0.25 mm adapted to the outline of the inner glass wall 3 each of which is joined to a stretch of copper pipe 7, 8 for the flow of fluids (whether liquid or gas) with a thickness of 0.5 to 1 mm, which join is made tangentially and carried out with ultrasound.

As one can see, between the two stretches of pipe 7, 8 there is additionally an intermediate element 9 made of flexible, insulating material, that has the advantages mentioned above. Making the sheets and stretches of pipe of the same material aids cohesion and joining of them both with ultrasound welding.

As one can see, the difference between the two embodiments of the invention shown in the figure lies in the configuration of the intermediate element 9.

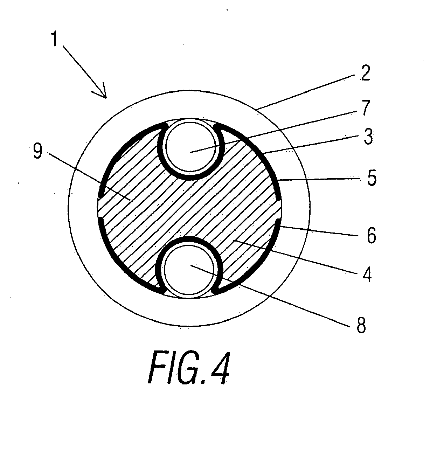

Lastly, in figure 4 one can see another embodiment of the invention in which each of the copper sheets 5, 6 partially envelops each of the stretches of pipe 7, 8.

The details, shapes, dimensions and other accessory elements, as well as the materials used in the manufacturing of the tubular heating element of the invention may be conveniently substituted with others that are technically equivalent and do not detract from the essential features of the invention or the scope defined by the claims set out below.

## Claims

1. A tubular element for heating fluids with solar power, comprising a tubular pipe (1) defined by two concentric glass walls (2, 3), the ends of which close upon themselves, and between which a vacuum is formed, and in which the inner wall of glass (3) that is in contact with the vacuum has a surface treatment, **characterised by** the fact that the inner part (4) of the pipe includes at least one sheet of copper (5),(6) adapted to the outline of the inner glass wall, and said at least one sheet of copper (5),(6) has a point of contact with each of the two stretches of pipe for the flow of fluids separated by a flexible intermediate element.

2. A tubular heating element according to claim 1, **characterised by** the fact that the at least one sheet of copper (5),(6) is joined to the stretches of copper pipe (7), (8) tangentially.

3. A tubular heating element according to claim 1, **characterised by** the fact that the at least one sheet of copper (5),(6) partially envelops each of the stretches of pipe.

4. A tubular heating element according to claim 1, **characterised by** the fact that the two aforementioned stretches of copper pipe (7), (8) are laid out at opposite ends.

5. A tubular heating element according to claim 1, **characterised by** the fact that the intermediate element is made of an insulating material.

6. A tubular heating element according to claim 1, **characterised by** the fact that it has an outer structure that has solar collection reflectors aimed at the tubular pipe.

7. A tubular heating element according to claim 1, **characterised by** the fact that it has two copper sheets, each of them joined to each of the stretches of pipe so that fluids can flow through.
